# EUROPÄISCHE PATENTANMELDUNG

(11) **EP 4 296 149 A1**
(43) Veröffentlichungstag der Anmeldung: **27.12.2023**
(21) Anmeldenummer: 22180964.3
(22) Anmeldetag: 24.06.2022
(51) Int. Cl.: B62D 33/04

(54) **KÜHLKOFFERAUFBAU UND SYSTEM VON KÜHLKOFFERAUFBAUTEN UND TIEFKÜHLKOFFERAUFBAU**

(71) Anmelder: Schmitz Cargobull AG, 48341 Altenberge (DE)
(72) Erfinder: BEELMANN, Reinhard, 45721 Haltern am See (DE)
(74) Vertreter: Cohausz & Florack

(57) **Zusammenfassung**

Beschrieben und dargestellt ist ein Kühlkofferaufbau (1) eines Nutzfahrzeugs (N) mit festen Seitenwänden (6), einem festen Dach (4) und einer Bodenstruktur (15), wobei die Seitenwände (6) jeweils ein Seitenwandpaneel (7) und das Dach (4) ein Dachpaneel (5) umfasst, wobei die Seitenwandpaneele (7) und das Dachpaneel (5) eine strukturgebende innere Decklage (16), eine strukturgebende äußere Decklage (17) und eine zwischen der inneren Decklage (16) und der äußeren Decklage (17) angeordnete Kernlage (18) aus Kunststoff (19) aufweisen und wobei die Bodenstruktur (15) einen an den Laderaum (14) grenzenden Ladeboden (20), eine Unterbodenlage (23) und eine wenigstens teilweise aus Kunststoff (19) gebildete Bodenlage (24) zwischen dem Ladeboden (20) und der Unterbodenlage (23) aufweist. Damit der Fertigungsaufwand und die Herstellungskosten für die Fertigung sowohl von Kühlkofferbauten als auch von Tiefkühlkofferaufbauten mit unterschiedlich dicken Seitenwänden gesenkt werden können, ist vorgesehen, dass die Bodenstruktur (15) an gegenüberliegenden Längsseiten jeweils eine sich wenigstens im Wesentlichen über die gesamte Längserstreckung der Bodenstruktur (15) erstreckende L-Profilstruktur (26) aufweist, dass die L-Profilstrukturen (26) jeweils einen der Unterbodenlage (23) zugeordneten, gegenüber der übrigen Bodenstruktur (15) seitlich vorstehenden und die zugehörige Seitenwand (6) untergreifenden unteren L-Schenkel (27) aufweist und dass die L-Profilstrukturen (26) jeweils einen separaten, wenigstens im Wesentlichen parallel zur Seitenwand (6) ausgerichteten und, insbesondere direkt, an die Seitenwand (6) angrenzenden oberen L-Schenkel (28) aufweisen.

## Beschreibung

Die Erfindung betrifft einen Kühlkofferaufbau eines Nutzfahrzeugs, insbesondere Lastkraftwagen, Anhänger oder Sattelauflieger, mit festen Seitenwänden, einem festen Dach und einer Bodenstruktur, wobei die Seitenwände jeweils ein Seitenwandpaneel und das Dach ein Dachpaneel umfasst, wobei die Seitenwandpaneele und das Dachpaneel eine strukturgebende, einem Laderaum des Kühlkofferaufbaus zugeordnete innere Decklage, eine strukturgebende, der Umgebung des Kühlkofferaufbaus zugeordnete äußere Decklage und eine zwischen der inneren Decklage und der äußeren Decklage angeordnete Kernlage aus Kunststoff aufweisen und wobei die Bodenstruktur einen an den Laderaum grenzenden Ladeboden, eine Unterbodenlage und eine wenigstens teilweise aus einem Kunststoff gebildete Bodenlage zwischen dem Ladeboden und der Unterbodenlage aufweist.

Zudem betrifft die Erfindung ein System aus wenigstens einem Kühlkofferaufbau und wenigstens einem Tiefkühlkofferaufbau jeweils eines Nutzfahrzeugs, insbesondere Lastkraftwagen, Anhänger oder Sattelauflieger, wobei der Tiefkühlkofferaufbau feste Seitenwände, ein festes Dach und eine Bodenstruktur umfasst, wobei die Seitenwände des Tiefkühlkofferaufbaus jeweils ein Seitenwandpaneel und das Dach des Tiefkühlkofferaufbaus ein Dachpaneel umfasst, wobei die Seitenwandpaneele und das Dachpaneel des Tiefkühlkofferaufbaus eine strukturgebende, einem Laderaum des Tiefkühlkofferaufbaus zugeordnete innere Decklage, eine strukturgebende, der Umgebung des Tiefkühlkofferaufbaus zugeordnete äußere Decklage und eine zwischen der inneren Decklage und der äußeren Decklage angeordnete Kernlage aus Kunststoff aufweisen und wobei die Bodenstruktur des Tiefkühlkofferaufbaus einen an den Laderaum grenzenden Ladeboden, eine Unterbodenlage und eine wenigstens teilweise aus einem Kunststoff gebildete Bodenlage zwischen dem Ladeboden und der Unterbodenlage aufweist.

Nutzfahrzeuge sind in unterschiedlichen Ausgestaltungen, etwa in Form von Lastkraftwagen, Anhängern oder Sattelaufliegern, bekannt. Dabei sind die Nutzfahrzeuge unabhängig von ihrer Ausgestaltung insbesondere für den Transport von Gütern, also der zu transportierenden Ladung, überwiegend im öffentlichen Straßenverkehr vorgesehen. Zu diesem Zweck weisen die bekannten Nutzfahrzeuge ein Chassis, ein mit dem Chassis verbundenes Fahrwerk und einen von dem Chassis getragenen Aufbau auf, welcher einen Laderaum bereitstellt für die Aufnahme der zu transportierenden Ladung. So sind beispielsweise Planenaufbauten bekannt, die wenigstens eine Plane zum Verschließen wenigstens einer Seite und/oder eines Dachs des Planenaufbaus aufweisen. Wenn eine Plane entlang einer Seitenwand verschoben werden kann, spricht man auch von sogenannten Curtainsidern.

Im Gegensatz dazu sind bei sogenannten Kofferaufbauten die Seitenwände und das Dach durch feste Wände verschlossen. Zudem ist rückwärtig ein Türrahmen in Form eines Rückwandrahmens vorgesehen, an dem zwei Türen in Form von Rückwandtüren gehalten und in dem in der geschlossenen Stellung der Rückwandtüren die Rückwandtüren aufgenommen sind. Gegenüber von dem Rückwandrahmen ist eine Stirnwand vorgesehen. Bei Kofferaufbauten sind die Seitenwände, das Dach, die Stirnwand und die Rückwandtüren regelmäßig aus Seitenwandpaneelen, einem Dachpaneel, einem Stirnwandpaneel und Türpaneelen gebildet. Jedes dieser Paneele weist dabei bedarfsweise zwei strukturgebende Decklagen auf, zwischen denen eine Kernlage aus einem geschäumten oder extrudierten Kunststoff vorgesehen ist. Die entsprechenden Decklagen sind entweder der Umgebung des Kofferaufbaus oder dem Laderaum zugeordnet. Die Decklagen weisen also vereinfacht gesprochen nach innen oder nach außen. Jede Decklage kann dabei bedarfsweise mehrlagig ausgebildet sein und dient der Aussteifung der Paneele. Eine Decklage weist daher wenigstens eine Schicht aus einem Metall und/oder einem faserverstärkten Kunststoff auf.

Die Bodenstruktur der Kofferaufbauten weist einen an den Laderaum grenzenden Ladeboden und eine Unterbodenlage auf, welche den unteren Abschluss der Bodenstruktur bildet. Zwischen dem Ladeboden und der Unterbodenlage ist wie in den zuvor beschriebenen Paneelen wenigstens teilweise ein geschäumter Kunststoff in einer Bodenlage vorgesehen. Der Ladeboden und die Unterbodenlage schützen den geschäumten Kunststoff vor dem Eindringen von Feuchtigkeit oder vor mechanischen Beschädigungen. Die Verbindung der Bodenstruktur und der Seitenwände kann auf unterschiedliche Weisen erfolgen.

Die Kofferaufbauten können die Ladung im Laderaum gut gegen Feuchtigkeit schützen, weshalb Kofferaufbauten für den Transport von feuchtigkeitsempfindlichen Gütern zum Einsatz kommen. Die Kernlagen aus Kunststoff sorgen für eine gute thermische Isolation des Laderaums, weshalb Kofferaufbauten auch als Kühlkofferaufbauten zum Transport von temperaturempfindlichen Gütern verwendet werden. Um den Laderaum kühlen zu können, weisen Kühlkofferaufbauten an den Stirnseiten typischerweise Transportkältemaschinen auf. Diese sind so in die Stirnwände integriert, dass die Transportkältemaschinen Luft aus dem Laderaum ansaugen können, die dann in der Transportkältemaschine heruntergekühlt und sodann in den Laderaum zurückgeblasen wird. Wenn im Laderaum von Tiefkühlkofferaufbauten kosteneffizient sehr geringe Temperaturen bereitgestellt werden sollen, müssen nicht nur die Transportkältemaschinen entsprechend leistungsfähig sein. Es muss auch eine hinreichende thermische Isolierung des Laderaums sichergestellt werden. Dies wird typischerweise mittels dickeren Kernlagen in den Paneelen aus Kunststoff gewährleistet. Dies bedeutet aber auch, dass die entsprechenden Paneele, insbesondere die Seitenwände, von Tiefkühlkofferaufbauten dicker ausgebildet werden müssen. Da die äußeren Abmessungen der Kofferaufbauten genehmigungsrechtlich vorgegebene Anmessungen nicht überschreiten dürfen, gehen dickere Seitenwände regelmäßig zu Lasten der Breite des Laderaums.

Wenn Kofferaufbauten sowohl in Form von Kühlkofferaufbauten mit dünneren Seitenwänden und in Form von Tiefkühlkofferaufbauten mit dickeren Seitenwänden angeboten werden sollen, erfordert dies neben der reinen konstruktiven Anpassung der Seitenwände auch entsprechende konstruktive Anpassungen hinsichtlich der Verbindung der unterschiedlichen Seitenwände mit den jeweilige Bodenstrukturen und Dächern. Dies gilt jedenfalls dann, wenn stets die genehmigungsrechtlich vorgegebenen maximalen Breiten der Kofferaufbauten ausgenutzt werden sollen. Mit anderen Worten müssen auch die Bodenstrukturen und die Dächer konstruktiv angepasst werden, um Kofferaufbauten mit unterschiedlich dicken Seitenwänden fügen zu können. Dieser konstruktive Aufwand führt letztlich zu teureren Kofferaufbauten, die zudem aufwendiger und nur zu höheren Kosten zu fertigen sind.

Daher liegt der vorliegenden Erfindung die Aufgabe zugrunde, den Kühlkofferaufbau und das System jeweils der eingangs genannten und zuvor näher beschriebenen Art derart auszugestalten und weiterzubilden, dass der Fertigungsaufwand und die Herstellungskosten für die Fertigung sowohl von Kühlkofferbauten als auch von Tiefkühlkofferaufbauten mit unterschiedlich dicken Seitenwänden gesenkt werden können.

Diese Aufgabe ist bei einem Kühlkofferaufbau nach dem Oberbegriff von Anspruch 1 dadurch gelöst, dass die Bodenstruktur an gegenüberliegenden Längsseiten jeweils eine sich wenigstens im Wesentlichen über die gesamte Längserstreckung der Bodenstruktur erstreckende L-Profilstruktur aufweist, dass die L-Profilstrukturen jeweils einen der Unterbodenlage zugeordneten, gegenüber der übrigen Bodenstruktur seitlich vorstehenden und die zugehörige Seitenwand untergreifenden unteren L-Schenkel aufweist und dass die L-Profilstrukturen jeweils einen separaten, wenigstens im Wesentlichen parallel zur Seitenwand ausgerichteten und, insbesondere direkt, an die Seitenwand angrenzenden oberen L-Schenkel aufweisen.

Die genannte Aufgabe ist ferner bei einem System nach dem Oberbegriff des Anspruchs 15 dadurch gelöst, dass die Bodenstruktur des Tiefkühlkofferaufbaus an gegenüberliegenden Längsseiten jeweils einen sich wenigstens im Wesentlichen über die gesamte Längserstreckung der Bodenstruktur erstreckenden Schenkel aufweist, dass die Schenkel der Unterbodenlage zugeordnet, gegenüber der übrigen Bodenstruktur seitlich vorstehend die zugehörige Seitenwand untergreifen, dass der Kühlkofferaufbau nach einem der Ansprüche 1 bis 14 ausgebildet ist, dass der Schenkel des Tiefkühlkofferaufbaus gleichartig, insbesondere identisch, zu dem unteren L-Schenkel des Kühlkofferaufbaus ausgebildet ist und dass die Dicke jeder Seitenwand des Tiefkühlkofferaufbaus der gemeinsamen Dicke einer Seitenwand des Kühlkofferaufbaus und eines oberen L-Schenkels entspricht.

Zur Verbindung der Bodenstruktur mit den Seitenwänden ist an den gegenüberliegenden Längsseiten der Bodenstruktur des Kühlkofferaufbaus jeweils eine sich wenigstens im Wesentlichen über die gesamte Längserstreckung der Bodenstruktur erstreckende L-Profilstruktur vorgesehen. Dies erlaubt ein einfaches und genaues Verbinden der Bodenstruktur mit den zugehörigen Seitenwänden. Dabei weisen die L-Profilstrukturen jeweils einen der Unterbodenlage zugeordneten und gegenüber der übrigen Bodenstruktur seitlich vorstehenden unteren L-Schenkel auf. Die L-Profilstruktur ist also über den unteren L-Schenkel so ausgebildet, dass der untere L-Schenkel der Bodenstruktur die angrenzende Seitenwand wenigstens abschnittsweise untergreifen kann. Besonders bevorzugt ist es jedoch, wenn der untere L-Schenkel die angrenzende Seitenwand wenigstens im Wesentlichen über die gesamte Breite der Seitenwand untergreift. So kann eine stabile und langlebige Verbindung geschaffen werden, bei der der untere L-Schenkel die angrenzende Schmalseite der Seitenwand vor Beschädigung, insbesondere hinsichtlich der Kernlage der Seitenwand schützt. Die Seitenwände können mithin wenigstens bereichsweise auf den unteren L-Schenkeln aufgesetzt und/oder oberhalb der unteren L-Schenkel vorgesehen sein.

Durch die L-Profilstrukturen kann zudem eine im Wesentlichen einheitliche Bodenstruktur flexibel und einfach mit unterschiedlich dicken Seitenwänden kombiniert werden. Es ist also nicht erforderlich, für Kühlkofferaufbauten mit dünneren Seitenwänden und Tiefkühlkofferaufbauten mit dickeren Seitenwänden grundsätzlich unterschiedliche Bodenstrukturen bereitzustellen. Es ist lediglich eine geringfügige Modifikation der Bodenstruktur erforderlich, je nachdem mit welcher Art von Seitenwand die Bodenstruktur verbunden werden soll. Dies vereinfacht den Herstellungsprozess und erlaubt in hohem Maße die Verwendung von Gleichteilen bei der Herstellung von Kühlkofferaufbauten einerseits und Tiefkühlkofferaufbauten andererseits. Damit wird auch die Lagerhaltung vereinfacht und es kann sehr flexibel zu einem recht späten Zeitpunkt bei der Herstellung der Kofferaufbauten entschieden werden, welche Art von Seitenwänden bei den Kofferaufbauten tatsächlich verbaut werden soll bzw. ob Kühlkofferaufbauten oder Tiefkühlkofferaufbauten gefertigt werden sollen, was die Fertigung in hohem Maße flexibilisiert.

Diese Flexibilität und Anpassung der Bodenstruktur wird einfach durch die Verwendung eines geeigneten oberen L-Schenkels oder das Weglassen eines oberen L-Schenkels erreicht. Die Bodenstruktur unterschiedlicher Kofferaufbauten kann sich je nach den verbauten Seitenwänden also lediglich dadurch unterscheiden, ob ein oberer L-Schenkel vorgesehen ist und wenn ja, welche Art oberer L-Schenkel verbaut worden ist. Im Falle einer schmaleren Seitenwand weisen die seitlichen L-Profilstrukturen jeweils einen, bedarfsweise einen breiteren, separaten, an die Seitenwand angrenzenden oberen L-Schenkel auf. Der obere L-Schenkel ist dabei zweckmäßigerweise wenigstens im Wesentlichen parallel zur Seitenwand ausgerichteten und/oder direkt an die Seitenwand angrenzend vorgesehen. Zudem ist die Breite des oberen L-Schenkels zweckmäßigerweise an die tatsächliche Breite der zugehörigen Seitenwand angepasst.

Der obere L-Schenkel kann mithin als eine Art Adapter angesehen werden, der das Verbauen einer schmaleren Seitenwand ermöglicht. Wenn eine dickere Seitenwand verbaut werden soll, kann dagegen ein schmalerer L-Schenkel vorgesehen sein, so dass die dickeren Seitenwände näher an die Mittellängsachse des Kofferaufbaus heranrücken können. Das Verbauen dickerer Seitenwände führt daher nicht zu einem breiteren Kofferaufbau, der möglicherweise genehmigungsrechtliche Maximalbreiten für die Kofferaufbauten überschreiten würde. Wenn noch dickere Seitenwände verbaut werden sollen, etwa bei Tiefkühlkofferaufbauten, kann auch ganz auf einen oberen L-Schenkel verzichtet werden. Die Außenseite der Seitenwände kann so stets dieselbe Position einnehmen, egal, welche Art von Seitenwand verbaut werden soll.

Die Montage von Seitenwänden verschiedener Breiten unterscheidet sich dann nicht darin, wie weit außen die äußeren Decklagen der Seitenwände angeordnet sind. Dies wird wenigstens im Wesentlichen durch die maximal zulässigen Breiten der Kofferaufbauten bestimmt. Die Montage unterscheidet sich dagegen darin, wie weit sich die Seitenwände in Richtung der Mittellängsachse des Kofferaufbaus erstrecken. Wenn sich bestimmte Seitenwände nicht so weit in dieser Richtung erstrecken, wie andere Seitenwände, die mit im Wesentlichen der gleichen Bodenstruktur verbunden sind, wird diese verminderte Breite der Seitenwände durch die Verwendung von entsprechenden Zwischenstücken in Form des oberen L-Schenkels ausgeglichen. Die Anzahl der unterschiedlichen Arten von Seitenwänden, die mit der im Wesentlichen gleichartigen Bodenstruktur verbaut werden können, lässt sich grundsätzlich frei wählen und korrespondiert dabei vorzugsweise mit der Anzahl der unterschiedlichen oberen L-Schenkel, um die Breitenunterschiede dieser Anzahl von Seitenwänden ausgleichen zu können. So kann die Anzahl der unterschiedlichen Arten von Seitenwänden kann dabei um eins größer sein als die Anzahl der unterschiedlichen oberen L-Schenkel, da bei einer Seitenwand auf den oberen L-Schenkel verzichtet werden kann. Zwingend ist dies jedoch nicht, wenn bei Nutzfahrzeugen mehrere oberer L-Schenken miteinander kombiniert werden, um einen gemeinsamen oberen L-Schenkel zu bilden, der die Dickenunterschiede der Seitenwände ausgleicht. In vielen Fällen wird es jedoch aus Kostengründen bevorzugt sein, die Anzahl unterschiedlicher Arten von Seitenwänden gering zu halten. Meist kann es daher ausreichen und bevorzugt sein, wenn die Bodenstruktur dazu vorgesehen ist, mit zwei Arten von Seitenwänden unterschiedlicher Dicke verbunden zu werden, etwa um wahlweise Kühlkofferaufbauten oder Tiefkühlkofferaufbauten zu fertigen.

In einem Fall, etwa für die Bildung eines Kühlkofferaufbaus, kann dann ein oberer L-Schenkel vorgesehen sein, während in einem anderen Fall, etwa zur Bildung eines Tiefkühlkofferaufbaus, auf diesen oberen L-Schenkel verzichtet wird. Dann sind beispielsweise bei den Tiefkühlkofferaufbauten an den Seitenwänden der Bodenstruktur Schenkel vorgesehen, die gleichartig, insbesondere identisch, zu den unteren L-Schenkeln eines Kühlkofferaufbaus mit grundsätzlich gleichartiger Bodenstruktur ausgebildet sind. Zudem kann dann die Dicke der Seitenwände des Tiefkühlkofferaufbaus der gemeinsamen Dicke einer Seitenwand des Kühlkofferaufbaus und eines oberen L-Schenkels entsprechen. Wenn die dickere Seitenwand so dick ist wie die dünnere Seitenwand und der mit dieser dünneren Seitenwand verbaute oberer L-Schenkel zusammen, kann folglich bei gleicher Breite des Tiefkühlkofferaufbaus auf den oberen L-Schenkel des Kühlkofferaufbaus verzichten werden.

Damit die Kühlkofferaufbauten und Tiefkühlkofferaufbauten eine hohe thermische Isolation bereitstellen können, lässt sich die Wärmeleitung der Bodenstruktur und der Seitenwände durch die Wahl der Materialien verringern. Die Kernlagen der Seitenwände können wenigstens im Wesentlichen aus einem geschäumten und/oder extrudierten Kunststoff gebildet sein. Die Bodenlage der Bodenstruktur kann einen geschäumten und/oder extrudierten Kunststoff aufweisen. Die Bezeichnung Kunststoff soll vorliegend jedoch nicht zum Ausdruck bringen, dass es sich um einen einzigen Kunststoff handeln muss. Vielmehr können auch mehrere Kunststoffe im Sinne eines Kunststoffgemischs zur Bildung der Kernlage und/oder der Bodenlage herangezogen werden.

Bei einer ersten besonders bevorzugten Ausgestaltung des Kühlkofferaufbaus weisen die oberen L-Schenkel und/oder die unteren L-Schenkel einen wenigstens im Wesentlichen rechteckigen Querschnitt quer zu den Seitenwänden auf. In Bezug auf die oberen L-Schekel ermöglicht dies eine besonders einfache Fertigung, von Seitenwänden mit ebenfalls rechteckigem Querschnitt. Im Bereich der Bodenstruktur kann der Unterschied der Breiten der Querschnitte unterschiedlicher Arten von Seitenwänden einfach durch obere L-Schenkel ausgeglichen werden, welche den Querschnitt der entsprechenden Seitenwand auf eine vorbestimmte Standardbreite verbreitern. Dabei kann die breiteste Seitenwand bereits eine Breite bzw. Dicke aufweisen, die der vorbestimmten Standardbreite bzw. Standarddicke entspricht. Dann kann auf den Gebrauch eines zusätzlichen oberen L-Schenkels verzichtet werden, da die Breite bzw. Dicke der Seitenwand selbst ja bereits die entsprechende Standardbreite bzw. Standarddicke bereitstellt.

In Bezug auf den unteren L-Schenkel bietet sich alternativ oder zusätzlich zur Vereinfachung der Fertigung der Kofferaufbauten ein wenigstens im Wesentlichen rechteckiger Querschnitt an. Entsprechende Querschnitte sind einfach zu fertigen und erlauben ein einfaches Untergreifen der Seitenwände, die mithin oberhalb der unteren L-Schenkel vorgesehen werden können. Die unteren L-Schenkel können gleichfalls die unteren Ränder der Seitenwände schützen.

Alternativ oder zusätzlich können zudem die Seitenwände angrenzend an die oberen L-Schenkel einen wenigstens im Wesentlichen rechteckigen Querschnitt quer zu den Seitenwänden aufweisen. Die Seitenwände könne so einfach gefertigt und einfach in die Bodenstruktur integriert werden. Auch das Fügen von Seitenwänden und Bodenstruktur wird vereinfacht.

Eine einfache Montage und Herstellung des Kühlkofferaufbaus kann zudem erreicht werden, wenn die oberen L-Schenkel, insbesondere direkt, an die inneren Decklagen der zugehörigen Seitenwände angrenzen. Weitere Zwischenstücke und Fügeschritte sind somit entbehrlich. Wenn die oberen L-Schenkel als separate Bauteile, insbesondere in Form von Leisten, ausgebildet sind, können die L-Schenkel unabhängig davon auch einfach und schnell über die gesamte Längserstreckung der seitlichen Ränder der Bodenstruktur vorgesehen werden.

Um die Anbindung der Seitenwände an die Bodenstruktur zu vereinfachen, können sich die oberen L-Schenkel zweckmäßig wenigstens im Wesentlichen von den unteren L-Schenkeln bis zu einer von der Oberseite des Ladebodens definierten Ladebodenebene erstrecken. So kann der obere L-Schenkel über den gesamten unteren Rand als Zwischenstück fungieren, was einer einfachen Montage der Seitenwände entgegenkommt. Zudem wird eine langlebige und stabile Verbindung zwischen den Seitenwänden und der Bodenstruktur erreicht. Alternativ oder zusätzlich können sich die oberen L-Schenkel wenigstens im Wesentlichen von den unteren L-Schenkeln bis zu einer Sockelscheuerleiste der Seitenwand erstrecken. Es wird also ein sauberer und hygienischer Abschluss der Seitenwand auf Höhe des Ladebodens erreicht.

Dies gilt bedarfsweise umso mehr, wenn die oberen L-Schenkel, insbesondere wenigstens im Wesentlichen vollständig, unterhalb der vertikalen Projektion der Sockelscheuerleisten der Seitenwände angeordnet sind. Die oberen L-Schenkel sind mithin aus dem Laderaum nicht erkennbar und damit auch nicht befahrbar oder dergleichen. Mithin können die oberen L-Schenkel einfacher ausgebildet sein, als dies für den Ladeboden der Fall ist, an den eine Reihe von spezifischen Anforderungen gestellt wird.

Wenn die oberen L-Schenkel wenigstens im Wesentlichen bündig mit den den Seitenwänden zugeordneten Rückseiten der Sockelscheuerleisten abschließen, dient das ebenfalls einem einfachen Fügen der Seitenwände. Die Seitenwände können dann eine einfache, ebene innere Decklage aufweisen an die sich dann einfach nach innen die Sockelscheuerleiste und darunter der obere L-Schenkel anschließt.

Dem Ladeboden zugeordnete Leistenschenkel der Sockelscheuerleisten der Seitenwände können gegenüber den oberen L-Schenkeln in Richtung einer Mittellängsachse des Laderaums vorstehen. Auch in diesem Fall sind die oberen L-Schenkel nicht aus dem Laderaum des Kühlkofferaufbaus zu sehen. Die oberen L-Schenkel müssen also auch nicht als Teil des Ladebodens fungieren, sondern sind durch die Leistenschenkel der Sockelscheuerleisten geschützt. Alternativ oder zusätzlich können die dem Ladeboden zugeordneten Leistenschenkel der Sockelscheuerleisten der Seitenwände mit einem freien Ende auf dem Ladeboden, insbesondere einer Oberbodenlage des Ladebodens, aufstehen. So werden geringere Kräfte in die oberen L-Schenkel eingeleitet und können die auftretenden Kräfte stattdessen wenigstens teilweise in den Ladeboden abgeleitet werden. Die Verbindung zwischen den Seitenwänden und der Bodenstruktur ist mithin stabiler und langlebiger.

Hinsichtlich einer hohen Langlebigkeit und einer guten Hygiene bietet es sich an, wenn der Ladeboden eine durchgängige Oberbodenlage zum Betreten und/oder Befahren des Laderaums aus einem Metall, insbesondere Aluminium, aufweist. Um den Ladeboden stabil und zugleich kostengünstig ausbilden zu können, kann der Ladeboden eine die Oberbodenlage, insbesondere direkt, tragende, durchgehende Traglage aufweisen. Diese kann aus einem anderen Material wie die Oberbodenlage gebildet sein. Aus Kostengesichtspunkten bietet sich als Material insbesondere Holz an. Zudem ist es fertigungstechnisch einfach, wenn die Oberbodenlage und die Traglage miteinander verklebt sind.

Zur hinreichenden Aussteifung der Bodenstruktur, so dass diese beim Be- und Entladen des Laderaums befahren werden kann, bietet es sich an, wenn die Bodenstruktur eine Reihe voneinander beabstandeter Querträger umfasst. Dies ist umso mehr der Fall, wenn sich die Querträger wenigstens im Wesentlichen von einer L-Profilstruktur zur gegenüberliegenden L-Profilstruktur erstrecken. Alternativ oder zusätzlich können sich die Querträger aber aus diesem Grund auch von der Unterbodenlage bis zum Ladeboden erstrecken.

Damit sich eine hohe thermische Isolierung und eine geringe Wärmeleitung der Bodenstruktur ermöglichen lassen, kann zwischen den Querträgern der Bodenstruktur jeweils abschnittsweise der, insbesondere geschäumte und/oder extrudierte, Kunststoff der Bodenstruktur vorgesehen sein. Dabei bietet es sich alternativ oder zusätzlich an, wenn die Querträger aus Holz gebildet werden, da diese ebenfalls eine geringe Wärmeleitung bereitstellen.

Aus denselben Gründen und auch aus Kostengründen können die oberen L-Schenkel und/oder die unteren L-Schenkel zweckmäßig wenigstens im Wesentlichen aus Holz und/oder Kunststoff gebildet sein. Für einen stabilen Kühlkofferaufbau bietet es sich alternativ oder zusätzlich an, wenn die oberen L-Schenkel mit der übrigen Bodenstruktur verbunden sind. Fertigungstechnisch einfach und zugleich stabil ist es dabei, wenn die oberen L-Schenkel mit der übrigen Bodenstruktur verklebt und/oder verschraubt werden.

Die Fertigung der Kühlkofferaufbauten kann einfacher und kostengünstiger gestaltet werden, wenn Toleranzausgleichsspalte zwischen den Seitenwänden und unteren L-Schenkeln vorgesehen sind. Damit dort aber keine Feuchtigkeit eindringen kann, bietet es sich weiter an, wenn die Toleranzausgleichsspalten mit einem, insbesondere geschäumten Klebstoff und/oder einem geschäumten Kunststoff ausgefüllt sind. Dies dient dann gleichzeitig einer gewissen zusätzlichen thermischen Isolierung. Dabei ist es besonders einfach und funktional, wenn die Toleranzausgleichsspalten als Toleranzausgleichsnuten zwischen den Seitenwänden, den unteren L-Schenkeln und den oberen L-Schenkeln ausgebildet sind. So lassen sich die Seitenwände sehr schnell und einfach mit der Bodenstruktur fügen. Anschließend können die Toleranzausgleichsnuten mit entsprechenden Ausgleichsmassen ausgefüllt werden.

Um die Bodenstruktur gegenüber einem Eindringen von Feuchtigkeit zu schützen, und zwar über eine lange Lebensdauer der Kühlkofferaufbauten, können an den unteren Rändern der Längsränder der Bodenstruktur jeweils Eckprofile vorgesehen sein. Ergänzend können dann die Seitenwände an den unteren Rändern korrespondierende Eckprofile aufweisen. So lassen sich die Eckprofile der Bodenstruktur und die Eckprofile der Seitenwände spritzwasserdicht miteinander verbinden. Verbindungskräfte zwischen den Seitenwänden und der Bodenstruktur müssen diese Eckprofile aber nur bedingt aufnehmen, da dies überwiegend von den L-Profilstrukturen übernommen werden kann. Dabei ist es zudem einfach, die Eckprofile miteinander zu verkleben.

Der Kühlkofferaufbau kann eine feste Stirnwand umfassend ein Stirnwandpaneel aufweisen, wobei das Stirnwandpaneel eine strukturgebende, einem Laderaum des Kühlkofferaufbaus zugeordnete innere Decklage, eine strukturgebende, der Umgebung des Kühlkofferaufbaus zugeordnete äußere Decklage und eine zwischen der inneren Decklage und der äußeren Decklage angeordnete Kernlage aus einem, insbesondere geschäumten und/oder extrudierten, Kunststoff aufweisen. Dies ist kostengünstig, stabil und verringert die Wärmeleitung in den Laderaum des Kühlkofferaufbaus.

Zur Kühlung des Laderaums und zum Erzeugen von Kühlluft bietet es sich zudem an, wenn eine Transportkältemaschine an der Stirnwand vorgesehen ist, wobei die Transportkältemaschine zum Einblasen von Kühlluft in den Laderaum des Kühlkofferaufbaus über einen Kanal mit dem Laderaum verbunden sein kann. Dies ist energieeffizient und mit einem geringen Aufwand verbunden.

Nachfolgend wird die Erfindung anhand einer lediglich ein Ausführungsbeispiel darstellenden Zeichnung näher erläutert. In der Zeichnung zeigt
- Fig. 1: ein von einer Zugmaschine gezogenes Nutzfahrzeug mit einem erfindungsgemäßen Kühlkofferaufbau in einer perspektivischen Ansicht,
- Fig. 2: den Kühlkofferaufbau aus Fig. 1 in einer Schnittansicht entlang der Schnittebene III-III aus Fig. 1,
- Fig. 3A-B: Details des Kühlkofferaufbaus aus Fig. 1 im Verbindungsbereich zwischen der Bodenstruktur und den Seitenwänden Schnittansichten analog zum Detail IIIA aus Fig. 2,
- Fig. 4A-B: das Detail gemäß den Fig. 3A-B eines Tiefkühlkofferaufbaus in Schnittansichten analog zu Fig. 3A-B und
- Fig. 5: ein Detail eines alternativen Kühlkofferaufbaus im Verbindungsbereich zwischen der Bodenstruktur und den Seitenwänden in einer Schnittansicht analog zu Fig. 3A.

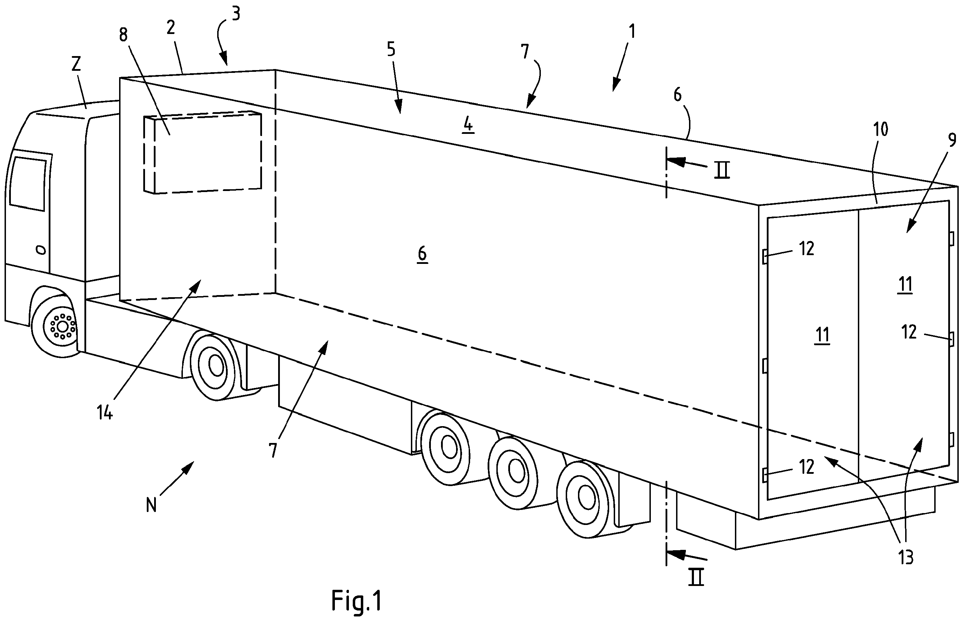

In der Fig. 1 ist ein von einem Nutzfahrzeug N in Form eines Sattelaufliegers getragener und von einer Zugmaschine Z gezogener Kofferaufbau in Form eines Kühlkofferaufbaus 1 dargestellt. Der Kühlkofferaufbau 1 umfasst eine Stirnwand 2 aus einem Stirnwandpaneel 3, ein Dach 4 aus einem Dachpaneel 5 und Seitenwände 6 aus jeweils einem Seitenwandpaneel 7. An der Stirnwand ist eine Transportkältemaschine 8 zum Kühlen des Kühlkofferaufbaus 1 mittels Kühlluft vorgesehen. An der Rückseite des Kühlkofferaufbaus 1 ist eine Rückwand 9 mit einem Rückwandrahmen 10 vorgesehen, in dem zwei Rückwandtüren 11 über Scharniere 12 schwenkbar gehalten sind, die ebenfalls durch ein Türpaneel 13 gebildet werden. Die Rückwandtüren 11 können aus einer in dem Rückwandrahmen 10 vorgesehenen, einen Laderaum 14 des Aufbaus 1 verschließenden geschlossenen Stellung in eine den Laderaum 14 für das Be- und Entladen durch den Rückwandrahmen 10 freigebende geöffnete Stellung und zurück verstellt werden.

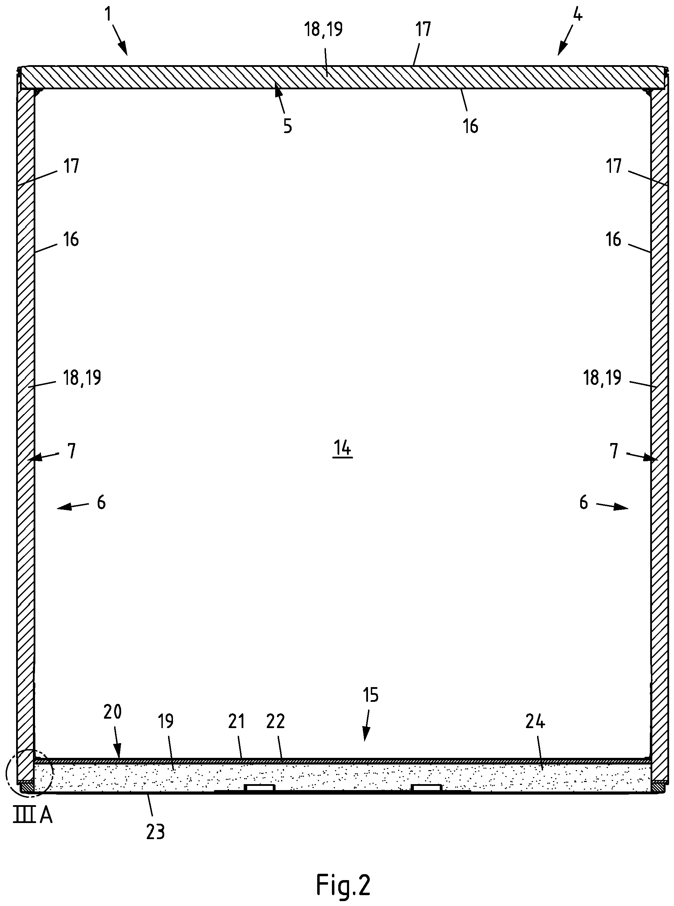

In der Fig. 2 ist ein Querschnitt durch den Kühlkofferaufbau 1 umfassend das Dach 4, eine Bodenstruktur 15 und die Seitenwände 6 dargestellt. Die Seitenwände 6 und das Dach 4 weisen einen wenigstens im Wesentlichen rechteckigen Querschnitt auf, wobei jeweils der Außenseite des Kühlkofferaufbaus 1 zugeordnet eine strukturgebende äußere Decklage 16 umfassend wenigstens eine Schicht aus einem Metall oder faserverstärktem Kunststoff vorgesehen ist. Dem Laderaum 14 zugeordnet ist eine strukturgebende innere Decklage 17 vorgesehen, die ebenfalls wenigstens eine Lage aus einem Metall oder einem faserverstärkten Kunststoff aufweist. Zwischen der inneren Decklage 16 und der äußeren Decklage 17 ist eine Kernlage 18 vorgesehen, die aus einem geschäumten und/oder einem extrudierten Kunststoff 19 gebildet sein kann. Die Seitenwände 6 sind an ihren unteren Enden mit der Bodenstruktur 15 des Kühlkofferaufbaus 1 verbunden. Die Bodenstruktur 15 weist angrenzend an den Laderaum 14 einen Ladeboden 20 auf, der bei dem dargestellten und insoweit bevorzugten Kühlkofferaufbau 1 aus einer oberen zum Befahren des Laderaums 14 vorgesehenen Oberbodenlage 21 und einer mit der Oberbodenlage 21 verklebten Traglage 22 zum Aussteifen des Ladebodens 20 gebildet ist. Die Oberbodenlage 21 kann aus Gründen der Hygiene aus einem Metall, insbesondere aus Aluminium gebildet sein. Der Unterseite der Bodenstruktur 15 zugeordnet ist eine Unterbodenlage 23 vorgesehen, die ebenfalls aus einem Metall wie beispielsweise einem Stahlblech gebildet sein kann. Die Unterbodenlage 23 schließt die Bodenstruktur 15 nach unten ab und verhindert so, dass Feuchtigkeit in die Kernlage 24 zwischen der Unterbodenlage 23 und dem Ladeboden 20 eindringen kann.

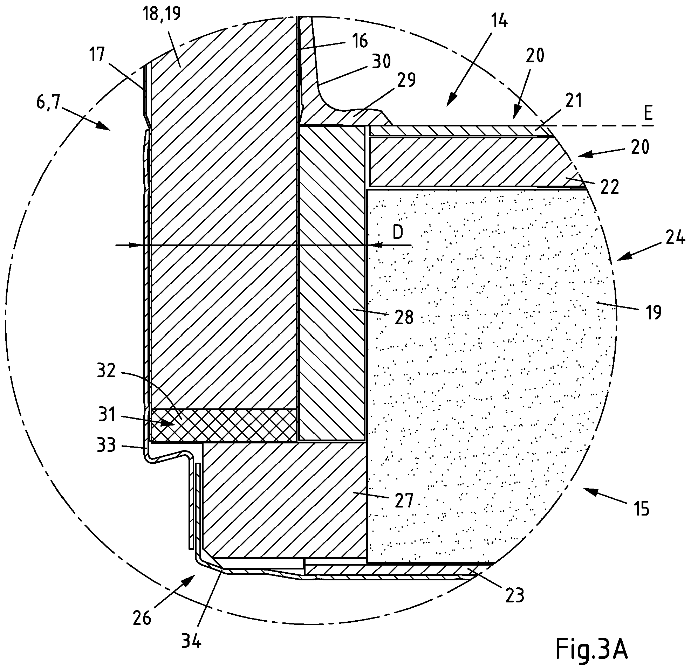

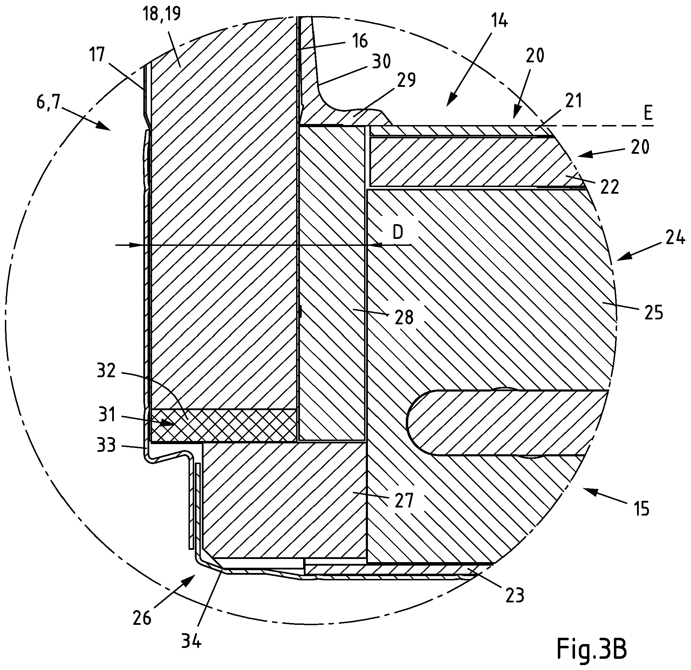

In den Fig. 3A-B ist ein Detail des Kühlkofferaufbaus 1 im Verbindungsbereich der Bodenstruktur 15 und einer Seitenwand 6 und zwar einmal im Bereich des Kunststoffs 19 der Bodenlage 24 und einmal im Bereich eines Querträgers 25 in der Bodenstruktur 15 dargestellt. Die Bodenlage der dargestellten und insoweit bevorzugten Bodenstruktur 15 weist abwechselnd Bereiche aus einem geschäumten und/oder extrudierten Kunststoff 19 und aus Querträgern 25 auf. Der Kunststoff 19 dient einer guten thermischen Isolierung während, die Querträger 25 zur Aussteifung der Bodenstruktur 15 beitragen. Damit die Wärmeleitung der Querträger 25 gering bleibt, sind die Querträger 25 der dargestellten und insoweit bevorzugten Bodenstruktur 15 aus Holz gebildet. Der Verbindungsbereich der Bodenstruktur 15 mit der gegenüberliegenden Seitenwand 6 ist analog wenn auch wenigstens im Wesentlichen spiegelsymmetrisch ausgebildet. Die Querträger 25 und der Kunststoff 19 erstrecken sich bei der dargestellten und insoweit bevorzugten Bodenstruktur 15 einerseits von der Unterbodenlage 23 bis zum Ladeboden 20 und andererseits von einer an einer Längsseite der Bodenstruktur 15 vorgesehenen L-Profilstruktur 26 zu einer an der gegenüberliegenden Längsseite vorgesehenen, gleichartigen L-Profilstruktur 26.

Die L-Profilstruktur 26 wird durch einen unteren L-Schenkel 27 und einen oberen L-Schenkel 28 gebildet. Bei der dargestellten und insoweit bevorzugten Bodenstruktur 15 werden der untere L-Schenkel 27 und der obere L-Schenkel 28 wenigstens im Wesentlichen aus Holz, insbesondere aus einer sich über die wenigstens im Wesentlichen gesamte Längsseite der Bodenstruktur 15 erstreckende Holzleiste gebildet. Der untere L-Schenkel 27 ist bei der dargestellten und insoweit bevorzugten Bodenstruktur 15 direkt mit den Querträgern 25, den Bereichen aus Kunststoff 19 und dem oberen L-Schenkel 28 verklebt. Der obere L-Schenkel 28 ist ebenfalls mit den Querträgern 25, den Bereichen aus Kunststoff 19 der Bodenstruktur 15 verklebt. Der obere L-Schenkel 28 ist darüber hinaus aber auch mit dem unteren Leistenschenkel 29 einer die Kante zwischen dem Ladeboden 20 und der Seitenwand 6 übergreifenden Sockelscheuerleiste 30 sowie mit dem unteren Rand der angrenzenden Seitenwand 6 verklebt. Der obere L-Schenkel 28 erstreckt sich vom unteren L-Schenkel 27 bis zu einer von der Oberseite des Ladebodens 20 definierten Ladebodenebene E. Der untere Leistenschenkel 29 steht gegenüber dem oberen L-Schenkel 28 in Richtung der Mittellängsachse des Kühlkofferaufbaus 1 vor. Das freie Ende des Leistenschenkels 29 steht dabei auf dem Ladeboden 20 auf und kann dort mit dem Ladeboden 20 verklebt sein. Das gegenüberliegende, äußere Ende der Sockelscheuerleiste 30 liegt an der inneren Decklage 16 der Seitenwand 6 an und ist dort mit der Seitenwand 6 verklebt. Auch der obere L-Schenkel 28 liegt mit seiner äußeren Seite an der inneren Decklage 16 der Seitenwand 6 an und ist dort mit der Seitenwand 6 verklebt.

Die Seitenwand 6 ist in dem mit dem oberen L-Schenkel 28 verbundenen Bereich grundsätzlich ebenso aufgebaut wie in dem Bereich oberhalb der Sockelscheuerleiste 30. In beiden Bereichen weist die Seitenwand 6 einen rechteckigen Querschnitt auf. Auch der obere L-Schenkel 28 und der untere L-Schenkel 27 weisen einen rechteckigen Querschnitt auf. Zwischen dem unteren L-Schenkel 27, dem oberen L-Schenkel 28 und dem unteren Rand der Seitenwand 6 ist eine Toleranzausgleichsnut 31 vorgesehen, die dem Ausgleich von Toleranzen dient. Die dargestellte und insoweit bevorzugte Toleranzausgleichsnut 31 weist einen wenigstens im Wesentlichen rechteckigen Querschnitt auf und wird nach dem Verbinden der Seitenwand 6 mit der Bodenstruktur 15 durch einen Kunststoff 32 ausgefüllt. Dabei kann es sich um einen geschäumten und/oder extrudierten Kunststoff, insbesondere in Form eines Klebstoffs, handeln. So kann verhindert werden, dass Feuchtigkeit von außen in die Bodenstruktur 15 oder die Seitenwand 6 eindringt. Zusätzlich stabilisieren muss der Kunststoff in der Toleranzausgleichnut 31 den Kühlkofferaufbau 1 jedoch nicht zwingend. Um einen Feuchtigkeitseintritt im Verbindungsbereich zwischen der Seitenwand 6 und der Bodenstruktur 15 zu vermeiden, ist der Bodenstruktur 15 und der Seitenwand 6 jeweils im äußeren Bereich ein Eckprofil 33,34 zugeordnet. Die einander zugeordneten Eckprofile 33,34 sind feuchtigkeitsdicht miteinander verbunden, insbesondere miteinander verklebt.

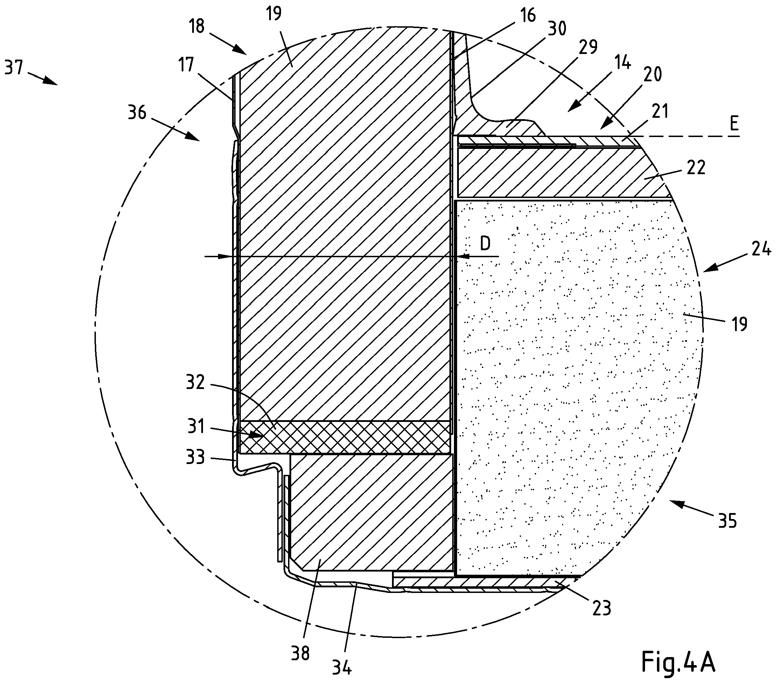

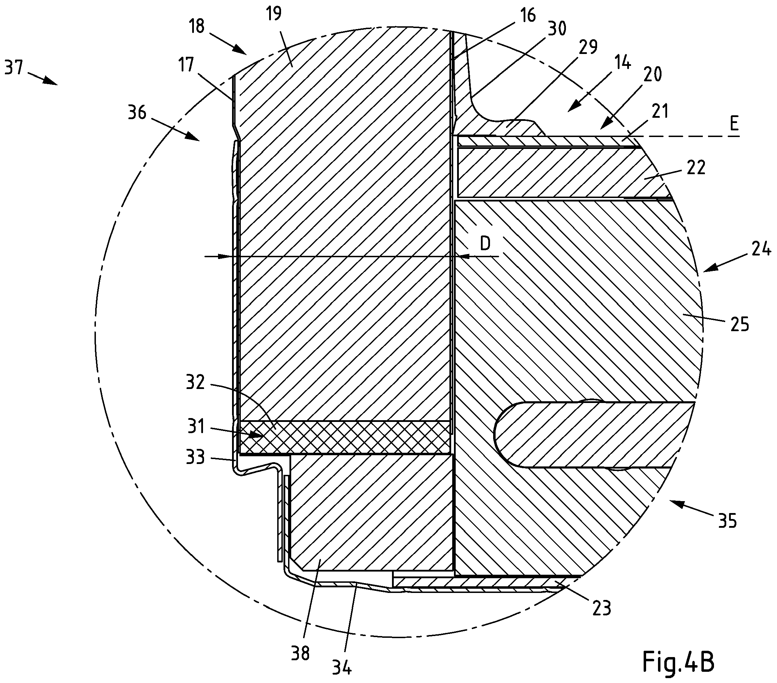

In den Fig. 4A-B ist ein Detail des Verbindungsbereichs zwischen einer Bodenstruktur 35 und einer Seitenwand 36 eines Tiefkühlkofferaufbaus 37 analog zu den Details der Fig. 3A-B dargestellt. Der gegenüberliegende Verbindungsbereich der Bodenstruktur 35 mit der anderen Seitenwand 36 ist analog ausgebildet und wenigstens im Wesentlichen spiegelsymmetrisch ausgebildet. Der Tiefkühlkofferaufbau 37 ist dabei grundsätzlich analog zu dem Kühlkofferaufbau 1 der Fig. 1 aufgebaut. Zudem entsprechen die Bodenstrukturen 15,35 des Kühlkofferaufbaus 1 und des Tiefkühlkofferaufbaus 37 einander, weshalb gleiche Bauteile auch gleiche Bezugszeichen tragen.

Es sind jedoch bei dem Tiefkühlkofferaufbau 37 dickere Seitenwände 36 und bedarfsweise auch ein dickeres Dach verbaut. Die Dicke D der Seitenwände 36 entspricht dabei wenigstens im Wesentlichen der Summe der Dicke D einer Seitenwand 6 des Kühlkofferaufbaus 1 und des oberen L-Schenkels 28 der Bodenstruktur 15 des Kühlkofferaufbaus 1. Es ist mithin bei dem Tiefkühlkofferaufbau 37 auf die L-Profilstruktur 26 mit einem oberen L-Schenkel 28 verzichtet worden. Es sind jedoch am unteren Rand der Bodenstruktur 35 an gegenüberliegenden Längsseiten gegenüber dem Rest der Bodenstruktur 35 seitlich vorstehende Schenkel 38 vorgesehen, die sich über wenigstens im Wesentlichen die gesamte Länge der Bodenstruktur 35 erstrecken und gleichartig zu dem unteren L-Schenkel 27 der L-Profilstruktur 26 des Kühlkofferaufbaus 1 aus Fig. 1 ausgebildet sind. Gleichartig bedeutet bei den dargestellten und insoweit bevorzugten Kofferaufbauten 1,37 der Fig. 1 und Fig. 4A-B insbesondere, dass der untere L-Schenkel 27 und der analoge Schenkel 36 wenigstens im Wesentlichen dieselbe Länge, Breite und Höhe aufweisen und zudem aus dem gleichen Material gefertigt sind.

Da bei dem Tiefkühlkofferaufbau 37 auf die oberen L-Schenkel 28 des Kühlkofferaufbaus 1 verzichtet wird, ist der untere Rand der Seitenwand 36 bei dem dargestellten und insoweit bevorzugten Tiefkühlkofferaufbau 37 direkt mit den Querträgern 25, dem dazwischen vorgesehenen Kunststoff 19 der Bodenstruktur 35 und mit dem Ladeboden 20 verklebt. In dem Kantenbereich zwischen der Seitenwand 36 und dem Ladeboden 20 ist eine Sockelscheuerleiste 30 vorgesehen, die mit ihrer äußeren Rückseite mit der inneren Decklage 16 der Seitenwand 36 verklebt ist und mit dem unteren Leistenschenkel 29 auf dem Ladeboden 20 aufsteht und mit dem Ladeboden 20 verklebt ist.

Zwischen dem unteren Rand der Seitenwand 36 des Tiefkühlkofferaufbaus 37, dem seitlichen Schenkel 38, den Querträgern 25 und dem zwischen den Querträgern 25 angeordneten Kunststoff 19 ist eine Toleranzausgleichsnut 31 zum Toleranzausgleich vorgesehen, die mit einem geschäumten und/oder extrudierten Kunststoff 32, insbesondere Klebstoff, ausgefüllt ist. Dem unteren Rand der Bodenstruktur 35 zugeordnet und verbunden mit der Unterbodenlage 23 ist ein Eckprofil 34 vorgesehen. Dem unteren Rand der Seitenwand 36 zugeordnet und mit der äußeren Decklage 17 verbunden ist ein weiteres Eckprofil 33 vorgesehen. Die beiden Eckprofile 33,34 sind feuchtigkeitsdicht miteinander verklebt.

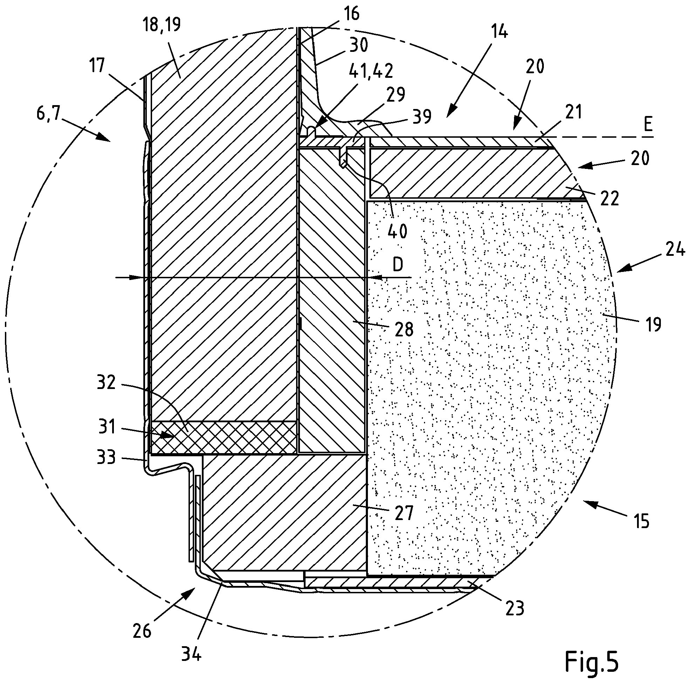

In der Fig. 5 ist ein Detail eines alternativen Kühlkofferaufbaus 1 im Verbindungsbereich der Bodenstruktur 15 und einer Seitenwand 6 und zwar einmal im Bereich des Kunststoffs 19 der Bodenlage 24 der Bodenstruktur 15 dargestellt. Das entsprechende Detail entspricht im Wesentlichen dem Detail gemäß Fig. 3A, weshalb grundsätzlich dieselben Bezugszeichen verwendet werden, wobei jedoch zusätzlich ein Verbindungsmittel 39 zur Verbindung der Sockelscheuerleiste 30 mit dem oberen L-Schenkel 28 vorgesehen ist. Die Verbindung von Sockelscheuerleiste 30 und oberem L-Schenkel 28 könnte jedoch auch durch Kleben bereitgestellt werden.

Das exemplarische dargestellte und insoweit bevorzugte Verbindungsmittel 39, das grundsätzlich bei ähnlicher Funktion auch konstruktiv abweichend ausgebildet sein könnte, umfasst wenigstens eine untere Rippe 40 oder wenigstens einen unteren Dorn, mit dem das Verbindungsmittel 39 in den oberen L-Schenkel 28, der bedarfsweise aus Holz gefertigt ist, eingesteckt oder eingeschlagen werden kann. Auf diese Weise wird eine kraftschlüssige Verbindung geschaffen, wobei alternativ oder zusätzlich auch eine stoffschlüssige Klebeverbindung in Frage käme. Der untere Leistenschenkel 29 der Sockelscheuerleiste 30 kann nun über wenigstens eine entsprechende Aussparung 41 mit wenigstens einer oberen Rippe 42 oder wenigstens einem oberen Zapfen verbunden werden. Dabei kann eine formschlüssige Verbindung, insbesondere eine Rastverbindung, gefügt werden. Um die Anzahl von Gleichteilen zu erhöhen, ist das Verbindungsmittel 39 als separates Bauteil über dem oberen L-Schenkel 28 vorgesehen und nicht in die Oberbodenlage 21 integriert, obschon dies grundsätzlich auch denkbar wäre.

### Bezugszeichenliste:

- 1: Kühlkofferaufbau
- 2: Stirnwand
- 3: Stirnwandpaneel
- 4: Dach
- 5: Dachpaneel
- 6: Seitenwand
- 7: Seitenwandpaneel
- 8: Transportkältemaschine
- 9: Rückwand
- 10: Rückwandrahmen
- 11: Rückwandtür
- 12: Scharnier
- 13: Türpaneel
- 14: Laderaum
- 15: Bodenstruktur
- 16: innere Decklage
- 17: äußere Decklage
- 18: Kernlage
- 19: Kunststoff
- 20: Ladeboden
- 21: Oberbodenlage
- 22: Traglage
- 23: Unterbodenlage
- 24: Bodenlage
- 25: Querträger
- 26: L-Profilstruktur
- 27: unterer L-Schenkel
- 28: oberer L-Schenkel
- 29: Leistenschenkel
- 30: Sockelscheuerleiste
- 31: Toleranzausgleichsnut
- 32: Kunststoff
- 33: Eckprofil
- 34: Eckprofil
- 35: Bodenstruktur
- 36: Seitenwand
- 37: Tiefkühlkofferaufbau
- 38: Schenkel
- 39: Verbindungsmittel
- 40: untere Rippe
- 41: Aussparung
- 42: obere Rippe
- D: Dicke
- E: Ladebodenebene
- N: Nutzfahrzeug
- Z: Zugmaschine

## Patentansprüche

1. Kühlkofferaufbau (1) eines Nutzfahrzeugs (N), insbesondere Lastkraftwagen, Anhänger oder Sattelauflieger, mit festen Seitenwänden (6), einem festen Dach (4) und einer Bodenstruktur (15), wobei die Seitenwände (6) jeweils ein Seitenwandpaneel (7) und das Dach (4) ein Dachpaneel (5) umfasst, wobei die Seitenwandpaneele (7) und das Dachpaneel (5) eine strukturgebende, einem Laderaum (11) des Kühlkofferaufbaus (1) zugeordnete innere Decklage (16), eine strukturgebende, der Umgebung des Kühlkofferaufbaus (1) zugeordnete äußere Decklage (17) und eine zwischen der inneren Decklage (16) und der äußeren Decklage (17) angeordnete Kernlage (18) aus Kunststoff (19) aufweisen und wobei die Bodenstruktur (15) einen an den Laderaum (14) grenzenden Ladeboden (20), eine Unterbodenlage (23) und eine wenigstens teilweise aus Kunststoff (19) gebildete Bodenlage (24) zwischen dem Ladeboden (20) und der Unterbodenlage (23) aufweist,
**dadurch gekennzeichnet, dass** die Bodenstruktur (15) an gegenüberliegenden Längsseiten jeweils eine sich wenigstens im Wesentlichen über die gesamte Längserstreckung der Bondenstruktur (15) erstreckende L-Profilstruktur (26) aufweist, dass die L-Profilstrukturen (26) jeweils einen der Unterbodenlage (23) zugeordneten, gegenüber der übrigen Bodenstruktur (15) seitlich vorstehenden und die zugehörige Seitenwand (6) untergreifenden unteren L-Schenkel (27) aufweist und dass die L-Profilstrukturen (26) jeweils einen separaten, wenigstens im Wesentlichen parallel zur Seitenwand (6) ausgerichteten und, insbesondere direkt, an die Seitenwand (6) angrenzenden oberen L-Schenkel (28) aufweisen.

2. Kühlkofferaufbau nach Anspruch 1,
**dadurch gekennzeichnet, dass** die oberen L-Schenkel (28) und/oder die unteren L-Schenkel (27) einen wenigstens im Wesentlichen rechteckigen Querschnitt quer zu den Seitenwänden (6) aufweisen und/oder dass die Seitenwände (6) angrenzend an die oberen L-Schenkel (28) einen wenigstens im Wesentlichen rechteckigen Querschnitt quer zu den Seitenwänden (6) aufweisen.

3. Kühlkofferaufbau nach Anspruch 1 oder 2,
**dadurch gekennzeichnet, dass** die oberen L-Schenkel (28), insbesondere direkt, an die inneren Decklagen (16) der zugehörigen Seitenwände (6) angrenzen und/oder dass die oberen L-Schenkel (28) als separate Bauteile, insbesondere in Form von Leisten, ausgebildet sind.

4. Kühlkofferaufbau nach einem der Ansprüche 1 bis 3,
**dadurch gekennzeichnet, dass** sich die oberen L-Schenkel (28) wenigstens im Wesentlichen von den unteren L-Schenkeln (27) bis zu einer von der Oberseite des Ladebodens (20) definierten Ladebodenebene (E) erstrecken und/oder dass sich die oberen L-Schenkel (28) wenigstens im Wesentlichen von den unteren L-Schenkeln (27) bis zu einer Sockelscheuerleiste (3) der Seitenwand (6) erstrecken.

5. Kühlkofferaufbau nach einem der Ansprüche 1 bis 4,
**dadurch gekennzeichnet, dass** die oberen L-Schenkel (28), insbesondere wenigstens im Wesentlichen vollständig, unterhalb von Sockelscheuerleisten (30) der Seitenwände (6) angeordnet sind und/oder dass die oberen L-Schenkel (28) wenigstens im Wesentlichen bündig mit den Seitenwänden (6) zugeordneten Rückseiten der Sockelscheuerleisten (30) abschließen.

6. Kühlkofferaufbau nach einem der Ansprüche 1 bis 5,
**dadurch gekennzeichnet, dass** dem Ladeboden (20) zugeordnete Leistenschenkel (29) der Sockelscheuerleisten (30) der Seitenwände (6) gegenüber den oberen L-Schenkeln (28) in Richtung einer Mittellängsachse des Laderaums (14) vorstehen und/oder dass die dem Ladeboden (20) zugeordnete Leistenschenkel (29) der Sockelscheuerleisten (30) der Seitenwände (6) mit einem freien Ende auf dem Ladeboden (20), insbesondere einer Oberbodenlage (21) des Ladebodens (20), aufstehen.

7. Kühlkofferaufbau nach einem der Ansprüche 1 bis 6,
**dadurch gekennzeichnet, dass** der Ladeboden (20) eine durchgängige Oberbodenlage (21) zum Betreten und/oder Befahren des Laderaums (14) aus einem Metall, insbesondere Aluminium, aufweist, dass, vorzugsweise, der Ladeboden (20) eine die Oberbodenlage (21), insbesondere direkt, tragende, durchgehende Traglage (22), insbesondere aus Holz, aufweist und dass, weiter vorzugsweise, die Oberbodenlage (21) und die Traglage (22) miteinander verklebt sind.

8. Kühlkofferaufbau nach einem der Ansprüche 1 bis 7,
**dadurch gekennzeichnet, dass** die Bodenstruktur (15) einer Reihe voneinander beabstandeter Querträger (25) umfasst und dass, vorzugsweise, sich die Querträger (25) wenigstens im Wesentlichen von einer L-Profilstruktur (26) zur gegenüberliegenden L-Profilstruktur (26) und/oder von der Unterbodenlage (23) bis zum Ladeboden (20) erstrecken.

9. Kühlkofferaufbau nach Anspruch 8,
**dadurch gekennzeichnet, dass** zwischen den Querträgern (25) der Bodenstruktur (15) jeweils abschnittsweise der, insbesondere geschäumte und/oder extrudierte, Kunststoff (19) der Bodenstruktur (15) vorgesehen ist.

10. Kühlkofferaufbau nach einem der Ansprüche 1 bis 9,
**dadurch gekennzeichnet, dass** die oberen L-Schenkel (28) und/oder die unteren L-Schenkel (27) wenigstens im Wesentlichen aus Holz und/oder Kunststoff gebildet sind und/oder dass die oberen L-Schenkel (28) mit der übrigen Bodenstruktur (15) verbunden, insbesondere verklebt und/oder verschraubt, sind.

11. Kühlkofferaufbau nach einem der Ansprüche 1 bis 10,
**dadurch gekennzeichnet, dass** Toleranzausgleichsspalte zwischen den Seitenwänden (6) und unteren L-Schenkeln (27) mit einem, insbesondere geschäumten und/oder extrudierten, Klebstoff und/oder einem, insbesondere geschäumten und/oder extrudierten, Kunststoff (32) ausgefüllt sind und dass, vorzugsweise, die Toleranzausgleichsspalte als Toleranzausgleichsnuten (31) zwischen den Seitenwänden (6), den unteren L-Schenkeln (27) und den oberen L-Schenkeln (28) ausgebildet sind.

12. Kühlkofferaufbau nach einem der Ansprüche 1 bis 11,
**dadurch gekennzeichnet, dass** die Bodenstruktur (15) an den unteren Rändern der Längsränder Eckprofile (34) aufweist, dass die Seitenwände (6) an den unteren Rändern Eckprofile (33) aufweisen und dass die Eckprofile (34) der Bodenstruktur (15) und die Eckprofile (33) der Seitenwände (6) spritzwasserdicht miteinander verbunden, insbesondere miteinander verklebt, sind

13. Kühlkofferaufbau nach einem der Ansprüche 1 bis 12,
**dadurch gekennzeichnet, dass** eine feste Stirnwand (2) umfassend ein Stirnwandpaneel (3) vorgesehen ist und dass das Stirnwandpaneel (3) eine strukturgebende, einem Laderaum (11) des Kühlkofferaufbaus (1) zugeordnete innere Decklage (16), eine strukturgebende, der Umgebung des Kühlkofferaufbaus (1) zugeordnete äußere Decklage (17) und eine zwischen der inneren Decklage (16) und der äußeren Decklage (17) angeordnete Kernlage (18) aus einem, insbesondere geschäumten und/oder extrudierten, Kunststoff (19) aufweist.

14. Kühlkofferaufbau nach Anspruch 13,
**dadurch gekennzeichnet, dass** eine Transportkältemaschine (8) zum Erzeugen von Kühlluft an der Stirnwand (2) vorgesehen ist und dass, vorzugsweise, die Transportkältemaschine (8) zum Einblasen von Kühlluft in den Laderaum (11) des Kühlkofferaufbaus (1) über einen Kanal mit dem Laderaum (11) verbunden ist.

15. System aus wenigstens einem Kühlkofferaufbau (1) und wenigstens einem Tiefkühlkofferaufbau (37) jeweils eines Nutzfahrzeugs (N), insbesondere Lastkraftwagen, Anhänger oder Sattelauflieger, wobei der Tiefkühlkofferaufbau (37) feste Seitenwände (36), ein festes Dach (4) und eine Bodenstruktur (35) umfasst, wobei die Seitenwände (36) des Tiefkühlkofferaufbaus (37) jeweils ein Seitenwandpaneel und das Dach (4) des Tiefkühlkofferaufbaus (37) ein Dachpaneel umfasst, wobei die Seitenwandpaneele und das Dachpaneel des Tiefkühlkofferaufbaus (37) eine strukturgebende, einem Laderaum (14) des Tiefkühlkofferaufbaus (37) zugeordnete innere Decklage (16), eine strukturgebende, der Umgebung des Tiefkühlkofferaufbaus (37) zugeordnete äußere Decklage (17) und eine zwischen der inneren Decklage (16) und der äußeren Decklage (17) angeordnete Kernlage (18) aus Kunststoff (19) aufweisen und wobei die Bodenstruktur (35) des Tiefkühlkofferaufbaus (37) einen an den Laderaum (14) grenzenden Ladeboden (20), eine Unterbodenlage (23) und eine wenigstens teilweise aus Kunststoff (19) gebildete Bodenlage (24) zwischen dem Ladeboden (20) und der Unterbodenlage (23) aufweist,
**dadurch gekennzeichnet, dass** die Bodenstruktur (35) des Tiefkühlkofferaufbaus (37) an gegenüberliegenden Längsseiten jeweils einen sich wenigstens im Wesentlichen über die gesamte Längserstreckung der Bodenstruktur (35) erstreckenden Schenkel (38) aufweist, dass die Schenkel (38) der Unterbodenlage (23) zugeordnet, gegenüber der übrigen Bodenstruktur (35) seitlich vorstehend die zugehörige Seitenwand (36) untergreifen, dass der Kühlkofferaufbau (1) nach einem der Ansprüche 1 bis 14 ausgebildet ist, dass der Schenkel (38) gleichartig, insbesondere identisch, zu dem unteren L-Schenkel (27) des Kühlkofferaufbaus (1) ausgebildet ist und dass die Dicke (D) jeder Seitenwand (36) des Tiefkühlkofferaufbaus (37) der gemeinsamen Dicke (D) einer Seitenwand (6) des Kühlkofferaufbaus (1) und eines oberen L-Schenkels (28) entspricht.
